(19)

Europäisches
Patentamt
European
Patent Office
Office européen
des brevets

(11) **EP 4 144 516 A1**

(12) **EUROPEAN PATENT APPLICATION**
published in accordance with Art. 153(4) EPC

(43) Date of publication:
**08.03.2023 Bulletin 2023/10**

(21) Application number: **21851189.7**

(22) Date of filing: **10.05.2021**

(51) International Patent Classification (IPC):
**B29K 9/00** [(2006.01)]  **B29K 105/04** [(2006.01)]
**C08J 9/06** [(2006.01)]  **B29C 44/00** [(2006.01)]
**B29C 44/36** [(2006.01)]

(52) Cooperative Patent Classification (CPC):
**B29C 44/00; B29C 44/36; C08J 9/06**

(86) International application number:
**PCT/JP2021/017732**

(87) International publication number:
**WO 2022/024489 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2020 JP 2020130855**

(71) Applicant: **Denka Company Limited
Tokyo 103-8338 (JP)**

(72) Inventors:
• **SATO, Hisao**
  **Tokyo 103-8338 (JP)**
• **ISHIGURO, Hiroyuki**
  **Tokyo 103-8338 (JP)**
• **SUNADA, Takashi**
  **Tokyo 103-8338 (JP)**

(74) Representative: **Hoffmann Eitle
Patent- und Rechtsanwälte PartmbB
Arabellastraße 30
81925 München (DE)**

(54) **FOAMING COMPOSITION, AND FOAM BODY AND PRODUCTION METHOD THEREFOR**

(57)     Provided is a foaming composition containing a chloroprene polymer, a plasticizer, a foaming agent, and a peptizer, in which a content of a filler is 10 parts by mass or less, a content of the plasticizer is 3 parts by mass or more, a content of the foaming agent is 5 parts by mass or more, and a content of the peptizer is 0.1 parts by mass or more, with respect to 100 parts by mass of the chloroprene polymer. Also provided are a foam body of the foaming composition, and a production method for a foam body, the method including a step of foaming the foaming composition.

EP 4 144 516 A1

**Description**

**Technical Field**

The present invention relates to a foaming composition, a foam body, a production method for a foam body, and the like.

**Background Art**

Foam bodies can be used for various use applications such as buildings, automobiles, electric equipment, and audio equipment. As a foaming composition for obtaining a foam body, a composition containing polypropylene, and the like are known (see, for example, the following Patent Literature 1).

**Citation List**

**Patent Literature**

Patent Literature 1: Japanese Unexamined Patent Publication No. 2018-119089

**Summary of Invention**

**Technical Problem**

A foaming composition for obtaining a foam body is required to have a high expansion ratio, from the viewpoint of efficiently obtaining a foam body having a low specific gravity.
An object of an aspect of the present invention is to provide a foaming composition having a high expansion ratio. An object of another aspect of the present invention is to provide a foam body of such a foaming composition. An object of another aspect of the present invention is to provide a production method for such a foam body.

**Solution to Problem**

An aspect of the present invention relates to a foaming composition containing a chloroprene polymer, a plasticizer, a foaming agent, and a peptizer, in which a content of a filler is 10 parts by mass or less, a content of the plasticizer is 3 parts by mass or more, a content of the foaming agent is 5 parts by mass or more, and a content of the peptizer is 0.1 parts by mass or more, with respect to 100 parts by mass of the chloroprene polymer.
Such a foaming composition has a high expansion ratio. As a result, a foam body having a low specific gravity can be efficiently obtained.
Another aspect of the present invention relates to a foam body of the above-mentioned foaming composition. Another aspect of the present invention relates to a production method for a foam body, the method including a step of foaming the above-mentioned foaming composition.

**Advantageous Effects of Invention**

According to an aspect of the present invention, a foaming composition having a high expansion ratio can be provided. According to another aspect of the present invention, a foam body of such a foaming composition can be provided. According to another aspect of the present invention, a production method for such a foam body can be provided.

**Description of Embodiments**

Hereinafter, embodiments for carrying out the present invention will be described in detail. Incidentally, the present invention is not intended to be limited to the embodiments described below.
In the present specification, the expression "A or more" of a numerical value range means A and a range of more than A. The expression "A or less" of a numerical value range means A and a range of less than A. With regard to the numerical value ranges described stepwise in the present specification, the upper limit value or lower limit value of the numerical value range of a certain stage can be arbitrarily combined with the upper limit value or lower limit value of the numerical value range of another stage. With regard to a numerical value range described in the present specification, the upper limit value or lower limit value of the numerical value range may be replaced with a value disclosed in Examples. The phrase "A or B" may include either A or B or may include both of them. With regard to the materials described as examples in the present specification, unless particularly stated otherwise, one kind thereof can be used alone, or a plurality of kinds thereof can be used in combination. With regard to the content of each component in the composition, in a case where there is a plurality of substances corresponding to each component in the composition, unless particularly stated otherwise, the content means the total amount of the plurality of substances present in the composition. The term "step" is not intended to mean an independent step only, and even in a case where a step cannot be clearly distinguished from other steps, the step is included in this term as long as the predetermined action of the step is achieved. The term "(meth)acrylic acid" means at least one of acrylic acid and methacrylic acid corresponding thereto. The same also applies to other similar expressions such as "(meth)acrylate" .

The foaming composition of the present embodiment contains a chloroprene polymer, a plasticizer, a foaming agent, and a peptizer. In the foaming composition of the present embodiment, the content of a filler is 10 parts by mass or less, the content of the plasticizer is 3 parts by mass or more, the content of the foaming agent is 5 parts by mass or more, and the content of the peptizer is 0.1 parts by mass or more, with respect to 100 parts by mass of the chloroprene polymer. A foam body of the present embodiment is a foam body obtainable by foaming the foaming composition of the present embodiment and is a foam body of the foaming composition of the present embodiment.

The foaming composition of the present embodiment has a high expansion ratio. As a result, a foam body having a low specific gravity can be efficiently obtained. For example, according to the foaming composition of the present embodiment, when a sheet composed of this foaming composition and having a length of 20 mm, a width of 20 mm, and a thickness of 3 mm is foamed at 170°C for 20 minutes and then maintained at 25°C for 30 minutes, an expansion ratio ([(volume after foaming - volume before foaming)/volume before foaming] × 100) of 700% (% by volume) or higher can be obtained. In a case where it is not intended to evaluate the expansion ratio, a foam body may also be obtained under conditions other than these conditions.

The above-mentioned expansion ratio may be 750% or higher, 800% or higher, 850% or higher, 900% or higher, 950% or higher, 1000% or higher, or 1050% or higher. The expansion ratio may be, for example, 1500% or lower.

The chloroprene polymer is a polymer having a structural unit derived from chloroprene (2-chloro-1,3-butadiene) (polymer having chloroprene as a monomer unit). The chloroprene polymer may be a homopolymer of chloroprene; a copolymer of chloroprene and other monomer capable of copolymerizing with chloroprene; or the like. The polymer structure of the chloroprene polymer is not particularly limited.

The content of a structural unit derived from chloroprene may be 50% by mass or more, 70% by mass or more, 90% by mass or more, 95% by mass or more, 98% by mass or more, or 99% by mass or more, based on the total mass of the chloroprene polymer, from the viewpoint that a high expansion ratio is likely to be obtained. The chloroprene polymer may be an embodiment composed of a structural unit derived from chloroprene (an embodiment in which substantially 100% by mass of the chloroprene polymer is composed of a structural unit derived from chloroprene).

Examples of the monomer capable of copolymerizing with chloroprene include esters of (meth)acrylic acid (methyl (meth)acrylate, butyl (meth)acrylate, 2-ethylhexyl (meth)acrylate, and the like), hydroxyalkyl (meth)acrylates (2-hydroxyethyl (meth)acrylate, 2-hydroxymethyl (meth)acrylate, 2-hydroxypropyl (meth)acrylate, and the like), 2,3-dichloro-1,3-butadiene, 1-chloro-1,3-butadiene, butadiene, isoprene, ethylene, styrene, and acrylonitrile. The other monomer capable of copolymerizing with chloroprene is not limited to one kind, and for example, three or more kinds of monomers including chloroprene may be copolymerized.

The chloroprene polymer may be a sulfur-modified chloroprene polymer, a mercaptan-modified chloroprene polymer, a xanthogen-modified chloroprene polymer, a dithiocarbonate-based chloroprene polymer, a trithiocarbonate-based chloroprene polymer, a carbamate-based chloroprene polymer, or the like. From the viewpoint that a high expansion ratio is likely to be obtained, the chloroprene polymer may include a sulfur-modified chloroprene polymer.

The sulfur-modified chloroprene polymer may not have a structure represented by the following General Formula (I) at the molecular ends ($R^1$ represents an alkyl group having 1 to 4 carbon atoms).

$$-S-C(=S)-OR^1... \qquad (I)$$

The content of the chloroprene polymer may be in the following range based on the total mass of the foaming composition (total mass of the solid content; hereinafter, the same), from the viewpoint of achieving an excellent balance between the expansion ratio and processability (tacky adhesiveness). The content of the chloroprene polymer may be 50% by mass or more, more than 50% by mass, 55% by mass or more, 60% by mass or more, 65% by mass or more, 67% by mass or more, 68% by mass or more, 69% by mass or more, 70% by mass or more, 71% by mass or more, 72% by mass or more, 73% by mass or more, 74% by mass or more, 75% by mass or more, or 76% by mass or more. The content of the chloroprene polymer may be 90% by mass or less, 85% by mass or less, 80% by mass or less, 79% by mass or less, 78% by mass or less, 77% by mass or less, 76% by mass or less, 75% by mass or less, 74% by mass or less, 73% by mass or less, 72% by mass or less, 71% by mass or less, 70% by mass or less, 69% by mass or less, 68% by mass or less, or 67% by mass or less. From these viewpoints, the content of the chloroprene polymer may be 50% to 90% by mass, 60% to 80% by mass, or 65% to 80% by mass.

The foaming composition of the present embodiment may contain a filler or may not contain a filler. Examples of the filler include carbon black, silica, clay, talc, and calcium carbonate. The filler may not include at least one selected from the group consisting of silica, clay, talc, and calcium carbonate. From the viewpoint that a high expansion ratio is likely to be obtained, the filler may include carbon black.

Examples of the carbon black include furnace black obtained by an incomplete combustion method; thermal black obtained by a pyrolysis method; channel black; and acetylene black. Examples of the furnace black include HAF (High Abrasion Furnace Black), SAF (Super Abrasion Furnace Black), ISAF (Intermediate Super Abrasion Furnace Black), IISAF (Intermediate ISAF), MAF (Medium Abrasion Furnace Black), FEF (Fast Extruding Furnace Black), SRF (Semi-Reinforcing Furnace Black), GPF (General Purpose Furnace Black), FF (Fine Furnace Black), and CF (Conductive Furnace Black). Examples of the thermal black include FT (Fine Thermal Black) and MT (Medium Thermal Black). Examples of the channel black include EPC (Easy Processing Channel Black) and MPC (Medium Processing Channel Black). Examples of the acetylene black include ACET (Acetylene Black). The carbon black may include HAF, from the viewpoint that a high expansion ratio is likely to be obtained.

From the viewpoint of obtaining a high expansion ratio, the content of the filler is 10 parts by mass or less with respect to 100 parts by mass of the chloroprene polymer. From the viewpoint that a high expansion ratio is likely to be obtained, the content of the filler may be less than 10 parts by mass, 8 parts by mass or less, 6 parts by mass or less, 5 parts by mass or less, 4 parts by mass or less, 3 parts by mass or less, 2 parts by mass or less, or 1 part by mass or less. The content of the filler is 0 parts by mass or more, may be more than 0 parts by mass, or may be 0.5 parts by mass or more, 1 part by mass or more, 2 parts by mass or more, 3 parts by mass or more, 4 parts by mass or more, 5 parts by mass or more, 6 parts by mass or more, or 8 parts by mass or more. From these viewpoints, the content of the filler is 0 to 10 parts by mass and may be more than 0 parts by mass and 10 parts by mass or less, more than 0 parts by mass and 5 parts by mass or less, more than 0 parts by mass and 2 parts by mass or less, or 1 to 5 parts by mass. From the same viewpoint, the content of the carbon black may be in each of the above-described ranges with respect to 100 parts by mass of the chloroprene polymer.

The content of the filler may be in the following range based on the total mass of the foaming composition. From the viewpoint that a high expansion ratio is likely to be obtained, the content of the filler may be 10% by mass or less, 9% by mass or less, 8% by mass or less, 7% by mass or less, 6% by mass or less, 5% by mass or less, 4% by mass or less, 3% by mass or less, 2% by mass or less, 1% by mass or less, 0.8% by mass or less, 0.75% by mass or less, 0.72% by mass or less, 0.7% by mass or less, or 0.5% by mass or less. The content of the filler is 0% by mass or more, may be more than 0% by mass, or may be 0.1% by mass or more, 0.3% by mass or more, 0.5% by mass or more, 0.7% by mass or more, 0.72% by mass or more, 0.75% by mass or more, 0.8% by mass or more, 1% by mass or more, 2% by mass or more, 3% by mass or more, 4% by mass or more, 5% by mass or more, or 6% by mass or more. From these viewpoints, the content of the filler may be 0% to 10% by mass, more than 0% and 10% by mass or less, more than 0% by mass and 4% by mass or less, more than 0% by mass and 1% by mass or less, or more than 0% by mass and 0.8% by mass or less. From the same viewpoint, the content of carbon black may be in each of the above-described ranges based on the total mass of the foaming composition.

The foaming composition of the present embodiment contains a plasticizer. Examples of the plasticizer include a sebacic acid-based plasticizer, a phthalate-based plasticizer, an adipic acid-based plasticizer (dioctyl adipate (DOA) and the like), an ester-based plasticizer, an ether/ester-based plasticizer, a thioether-based plasticizer, an aromatic oil, a naphthenic oil, and plant oils (rapeseed oil and the like). Examples of the sebacic acid-based plasticizer include sebacic acid derivatives such as dioctylsebacic acid (for example, bis(2-ethylhexyl) sebacate (DOS)), dimethylsebacic acid, diethylsebacic acid, dibutylsebacic acid, diisopropylsebacic acid, and dicaprylsebacic acid. From the viewpoint that a high expansion ratio is likely to be obtained, the plasticizer may include a sebacic acid-based plasticizer, may include a sebacic acid derivative, and may include bis(2-ethylhexyl) sebacate.

From the viewpoint of obtaining a high expansion ratio, the content of the plasticizer is 3 parts by mass or more with respect to 100 parts by mass of the chloroprene polymer. From the viewpoint that a high expansion ratio is likely to be obtained, the content of the plasticizer may be 5 parts by mass or more, 6 parts by mass or more, 8 parts by mass or more, 10 parts by mass or more, 12 parts by mass or more, 15 parts by mass or more, 18 parts by mass or more, 20 parts by mass or more, 22 parts by mass or more, or 25 parts by mass or more. From the viewpoint that excellent processability (tacky adhesiveness) is likely to be obtained, the content of the plasticizer may be 50 parts by mass or less, 48 parts by mass or less, 40 parts by mass or less, 35 parts by mass or less, 30 parts by mass or less, 28 parts by mass or less, 25 parts by mass or less, 22 parts by mass or less, 20 parts by mass or less, 18 parts by mass or less, 15 parts by mass or less, 12 parts by mass or less, 10 parts by mass or less, 8 parts by mass or less, 6 parts by mass or less, or 5 parts by mass or less. From these viewpoints, the content of the plasticizer may be 3 to 50 parts by mass, 3 to 30 parts by mass, 3 to 25 parts by mass, 5 to 25 parts by mass, 10 to 25 parts by mass, 10 to 20 parts by mass, 10 to 15 parts by mass, 3 to 20 parts by mass, 3 to 10 parts by mass, 5 to 20 parts by mass, or 5 to 10 parts by mass. From the same viewpoint, the content of the sebacic acid derivative may be in each of the above-described ranges with respect to 100 parts by mass of the chloroprene polymer.

The content of the plasticizer may be in the following ranges based on the total mass of the foaming composition. From the viewpoint that a high expansion ratio is likely to be obtained, the content of the plasticizer may be 1% by mass or more, 2% by mass or more, 3% by mass or more, 4% by mass or more, 5% by mass or more, 6% by mass or more, 7% by mass or more, 7.5% by mass or more, 8% by mass or more, 10% by mass or more, 12% by mass or more, or 13% by mass or more. From the viewpoint that excellent processability (tacky adhesiveness) is likely to be obtained, the content of the plasticizer may be 30% by mass or less, 25% by mass or less, 20% by mass or less, 18% by mass or less, 16% by mass or less, 15% by mass or less, 14% by mass or less, 13% by mass or less, 12% by mass or less, 10% by mass or less, 8% by mass or less, 7.5% by mass or less, 7% by mass or less, 6% by mass or less, 5% by mass or less, or 4% by mass or less. From these viewpoints, the content of the plasticizer may be 1% to 30% by mass, 2% to 30% by mass, 2% to 20% by mass, 3% to 20% by mass, 3% to 10% by mass, 5% to 20% by mass, 5% to 15% by mass, or 5% to 10% by mass. The content of the plasticizer may be 14% by mass or more, 15% by mass or more, or 16% by mass or more. From the same viewpoint, the content of the sebacic acid derivative may be in each of the above-described ranges based on the total mass of the foaming composition.

The foaming composition of the present embodiment contains a foaming agent. Examples of the foaming agent include an organic foaming agent and an inorganic foaming agent (sodium hydrogen carbonate, ammonium carbonate, and the like). From the viewpoint that a high expansion ratio is likely to be obtained, the foaming agent may include an organic foaming agent.

Examples of the organic foaming agent include a hydrazide-based foaming agent, a nitroso-based foaming agent, and an azo-based foaming agent. From the viewpoint that a high expansion ratio is likely to be obtained, the organic foaming agent may include a hydrazide-based foaming agent.

Examples of the hydrazide-based foaming agent include p,p'-oxybisbenzenesulfonyl hydrazide, benzenesulfonyl hydrazide, toluenesulfonyl hydrazide, and hydrazodicarbonamide. Examples of the nitroso-based foaming agent include N,N'-dinitrosopentamethylenetetramine. Examples of the azo-based foaming agent include diazoaminebenzene, azodicarbonamide, azobisisobutyronitrile, and barium azodicarboxylate.

From the viewpoint of obtaining a high expansion ratio, the content of the foaming agent is 5 parts by mass or more with respect to 100 parts by mass of the chloroprene polymer. From the viewpoint that a high expansion ratio is likely to be obtained, the content of the foaming agent may be 6 parts by mass or more, 8 parts by mass or more, 10 parts by mass or more, 12 parts by mass or more, 15 parts by mass or more, 18 parts by mass or more, or 20 parts by mass or more. The content of the foaming agent may be 30 parts by mass or less, 25 parts by mass or less, 20 parts by mass or less, 18 parts by mass or less, 15 parts by mass or less, 12 parts by mass or less, 10 parts by mass or less, or 8 parts by mass or less. From these viewpoints, the content of the foaming agent may be 5 to 30 parts by mass, 5 to 25 parts by mass, 5 to 20 parts by mass, 5 to 15 parts by mass, 5 to 10 parts by mass, 10 to 25 parts by mass, 10 to 20 parts by mass, or 10 to 15 parts by mass. From the same viewpoint, the content of the organic foaming agent may be in each of the above-described ranges, and the content of the hydrazide-based foaming agent may be in each of the above-described ranges, with respect to 100 parts by mass of the chloroprene polymer.

The content of the foaming agent may be in the following ranges based on the total mass of the foaming composition. From the viewpoint that a high expansion ratio is likely to be obtained, the content of the foaming agent may be 1% by mass or more, 2% by mass or more, 3% by mass or more, 4% by mass or more, 5% by mass or more, 6% by mass or more, 7% by mass or more, 7.5% by mass or more, 8% by mass or more, 10% by mass or more, 12% by mass or more, or 13% by mass or more. The content of the foaming agent may be 20% by mass or less, 15% by mass or less, 13% by mass or less, 12% by mass or less, 10% by mass or less, 8% by mass or less, 7.5% by mass or less, 7% by mass or less, 6% by mass or less, 5% by mass or less, or 4% by mass or less. From these viewpoints, the content of the foaming agent may be 1% to 20% by mass, 3% to 20% by mass, 3% to 15% by mass, 3% to 10% by mass, 5% to 15% by mass, 5% to 10% by mass, 6% to 10% by mass, or 6% to 8% by mass. From the same viewpoint, the content of the organic foaming agent may be in each of the above-described ranges based on the total mass of the foaming composition, and the content of the hydrazide-based foaming agent may be in each of the above-described ranges.

The foaming composition of the present embodiment contains a peptizer. The peptizer may have an action of cleaving the molecular chains of a polymer component and may further have an action as a vulcanization accelerator. Examples of the peptizer include dithiocarbamate-based compounds such as pentamethylenedithiocarbamic acid piperidine salt (PPD), zinc diethyldithiocarbamate, zinc dibutyldithiocarbamate, and sodium dibutyldithiocarbamate; thiuram-based compounds such as tetramethylthiuram disulfide and tetraethylthiuram disulfide; 2,2'-dibenzamidodiphenyl disulfide-based compounds; thiazole-based compounds; xanthogenic acid-based compounds; and imidazole-based compounds. The peptizer may include a dithiocarbamate-based compound from the viewpoint that a high expansion ratio is likely to be obtained.

From the viewpoint of obtaining a high expansion ratio, the content of the peptizer is 0.1 parts by mass or more with respect to 100 parts by mass of the chloroprene polymer. From the viewpoint that a high expansion ratio is likely to be obtained, the content of the peptizer may be 0.2 parts by mass or more, 0.3 parts by mass or more, 0.5 parts by mass or more, 0.8 parts by mass or more, 1 part by mass or more, 1.2 parts by mass or more, 1.5 parts by mass or more, 1.8 parts by mass or more, 2 parts by mass or more, 2.5 parts by mass or more, or 3 parts by mass or more. From the viewpoint that excellent processability (tacky adhesiveness) is likely to be obtained, the content of the peptizer may be 10 parts by mass or less, 8 parts by mass or less, 5 parts by mass or less, 3 parts by mass or less, 2.5 parts by mass or less, 2 parts by mass or less, 1.8 parts by mass or less, 1.5 parts by mass or less, 1.2 parts by mass or less, 1 part by mass or less, 0.8 parts by mass or less, 0.5 parts by mass or less, 0.3 parts by mass or less, or 0.2 parts by mass or less. From these viewpoints, the content of the peptizer may be 0.1 to 10 parts by mass, 0.1 to 3 parts by mass, 0.1 to 2 parts by mass, 0.1 to 1 part by mass, 0.2 to 3 parts by mass, 0.2 to 2 parts by mass, 0.2 to 1 part by mass, 0.5 to 3 parts by mass, 1 to 3 parts by mass, 0.5 to 2 parts by mass, 0.5 to 1 part by mass, or 1 to 2 parts by mass. From the same viewpoint, the content of the dithiocarbamate-based compound may be in each of the above-described ranges with respect to 100 parts by mass of the chloroprene polymer.

The content of the peptizer may be in the following ranges based on the total mass of the foaming composition. From the viewpoint that a high expansion ratio is likely to be obtained, the content of the peptizer may be 0.01% by mass or more, 0.03% by mass or more, 0.05% by mass or more, 0.07% by mass or more, 0.1% by mass or more, 0.3% by mass or more, 0.4% by mass or more, 0.5% by mass or more, 0.7% by mass or more, 1% by mass or more, 1.2% by mass or more, or 1.5% by mass or more. From the viewpoint that excellent processability (tacky adhesiveness) is likely to be obtained, the content of the peptizer may be 5% by mass or less, 4% by mass or less, 3% by mass or less, 2.5% by mass or less, 2% by mass or less, 1.8% by mass or less, 1.5% by mass or less, 1.2% by mass or less, 1% by mass or less, 0.7% by mass or less, 0.5% by mass or less, 0.4% by mass or less, 0.3% by mass or less, or 0.1% by mass or less. From these viewpoints, the content of the peptizer may be 0.01% to 5% by mass, 0.05% to 5% by mass, 0.05% to 3% by mass, 0.1% to 3% by mass, 0.1% to 2.5% by mass, 0.1% to 2% by mass, 0.1% to 1.5% by mass, 0.1% to 1% by mass, 0.4% to 3% by mass, 0.5% to 3% by mass, 0.4% to 2% by mass, 0.4% to 1% by mass, 0.5% to 1% by mass, or 0.6% to 0.8% by mass. The content of the peptizer may be 1.8% by mass or more, or 2% by mass or more. From the same viewpoint, the content of the dithiocarbamate-based compound may be in each of the above-described ranges based on the total mass of the foaming composition.

The foaming composition of the present embodiment may contain a vulcanizing agent. Examples of the vulcanizing agent include inorganic compounds such as sulfur, zinc oxide (ZnO), magnesium oxide (MgO), lead oxide, trilead tetroxide, iron trioxide, titanium dioxide, calcium oxide, and hydrotalcite. From the viewpoint that a high expansion ratio is likely to be obtained, the vulcanizing agent may include at least one selected from the group consisting of zinc oxide and magnesium oxide.

The content of the vulcanizing agent may be in the following ranges with respect to 100 parts by mass of the chloroprene polymer. The content of the vulcanizing agent may be more than 0 parts by mass, and from the viewpoint that a high expansion ratio is likely to be obtained, the content may be 0.1 parts by mass or more, 0.5 parts by mass or more, 1 part by mass or more, 2 parts by mass or more, 3 parts by mass or more, 4 parts by mass or more, 5 parts by mass or more, 6 parts by mass or more, 7 parts by mass or more, 8 parts by mass or more, or 9 parts by mass or more. From the viewpoint that a high expansion ratio is likely to be obtained, the content of the vulcanizing agent may be 20 parts by mass or less, 15 parts by mass or less, 12 parts by mass or less, 10 parts by mass or less, or 9 parts by mass or less. From these viewpoints, the content of the vulcanizing agent may be more than 0 parts by mass and 20 parts by mass or less, more than 0 parts by mass and 10 parts by mass or less, or 5 to 10 parts by mass.

The content of the vulcanizing agent may be in the following ranges based on the total mass of the foaming composition. The content of the vulcanizing agent may be more than 0% by mass, and from the viewpoint that a high expansion ratio is likely to be obtained, the content may be 0.1% by mass or more, 0.5% by mass or more, 1% by mass or more, 2% by mass or more, 3% by mass or more, 4% by mass or more, 5% by mass or more, or 6% by mass or more. From the viewpoint that a high expansion ratio is likely to be obtained, the content of the vulcanizing agent may be 20% by mass or less, 15% by mass or less, 10% by mass or less, 8% by mass or less, 7% by mass or less, or 6% by mass or less. From these viewpoints, the content of the vulcanizing agent may be more than 0% by mass and 20% by mass or less, more than 0% by mass and 10% by mass or less, or 3% to 8% by mass.

The foaming composition of the present embodiment may contain a vulcanization accelerator. Examples of the vulcanization accelerator include thiourea-based compounds such as ethylenethiourea, diethylthiourea, trimethylthiourea, triethylthiourea, N,N'-diphenylthiourea, and N,N'-diethylthiourea; and guanidine-based compounds such as 1,3-diphenylguanidine. From the viewpoint that a high expansion ratio is likely to be obtained, the vulcanization accelerator may include at least one selected from the group consisting of ethylenethiourea and guanidine.

The content of the vulcanization accelerator may be in the following ranges with respect to 100 parts by mass of the chloroprene polymer. The content of the vulcanization accelerator may be more than 0 parts by mass, and from the viewpoint that a high expansion ratio is likely to be obtained, the content may be 0.1 parts by mass or more, 0.5 parts by mass or more, 1 part by mass or more, 2 parts by mass or more, 3 parts by mass or more, 4 parts by mass or more, or 5 parts by mass or more. From the viewpoint that a high expansion ratio is likely to be obtained, the content of the vulcanization accelerator may be 10 parts by mass or less, 8 parts by mass or less, 7 parts by mass or less, 6 parts by mass or less, or 5 parts by mass or less. From these viewpoints, the content of the vulcanization accelerator may be more than 0 parts by mass and 10 parts by mass or less.

The content of the vulcanization accelerator may be in the following ranges based on the total mass of the foaming composition. The content of the vulcanization accelerator may be more than 0% by mass, and from the viewpoint that a high expansion ratio is likely to be obtained, the content may be 0.1% by mass or more, 0.5% by mass or more, 1% by mass or more, 2% by mass or more, or 3% by mass or more. From the viewpoint that a high expansion ratio is likely to be obtained, the content of the vulcanization accelerator may be 10% by mass or less, 8% by mass or less, 6% by mass or less, 5% by mass or less, or 4% by mass or less. From these viewpoints, the content of the vulcanization accelerator may be more than 0% by mass and 10% by mass or less.

The foaming composition of the present embodiment can contain an additive such as a resin component (excluding a chloroprene polymer), a rubber component (excluding a chloroprene polymer), a lubricating agent, an aging inhibitor, a surfactant, an emulsion stabilizer, a viscosity adjusting agent, an aging inhibitor, and an antiseptic agent, as a component other than the above-mentioned components. The foaming composition of the present embodiment may not contain an organic peroxide. The content of an organic peroxide may be less than 1 part by mass or 0.1 parts by mass or less, with respect to 100 parts by mass of the chloroprene polymer. The foaming composition of the present embodiment may not contain chlorinated paraffins. The content of chlorinated paraffins may be less than 5 parts by mass or 1 part by mass or less, with respect to 100 parts by mass of the chloroprene polymer.

Examples of the resin component include an ethylene/a-olefin/non-conjugated polyene copolymer and a poly(alkylphenol) polysulfide. The content of the ethylene/$\alpha$-olefin/non-conjugated polyene copolymer may be less than 3 parts by mass or 1 part by mass or less, with respect to 100 parts by mass of the chloroprene polymer. The content of the poly(alkylphenol) polysulfide may be less than 1 part by mass or 0.1 parts by mass or less, with respect to 100 parts by mass of the chloroprene polymer. The foaming composition of the present embodiment may not contain a water-absorbent resin as a resin component. The content of the water-absorbent resin may be less than 10 parts by mass or 1 part by mass or less, with respect to 100 parts by mass of the chloroprene polymer.

Examples of the rubber component include diene-based rubbers such as natural rubber, isoprene rubber, butyl rubber, nitrile rubber, hydrogenated nitrile rubber, butadiene rubber, styrene-butadiene rubber, ethylene-propylene-diene rubber, and chloroprene rubber; and non-diene-based rubbers such as butyl rubber and ethylene-propylene rubber. From the viewpoint of enhancing the tacky adhesiveness to a metal plate to which oil is attached, the rubber component may include butyl rubber.

The content of the rubber component may be in the following ranges with respect to 100 parts by mass of the chloroprene polymer, from the viewpoint of enhancing the tacky adhesiveness and from the viewpoint that a high expansion ratio is likely to be obtained. The content of the rubber component may be 0.1 parts by mass or more, 0.5 parts by mass or more, 1 part by mass or more, 3 parts by mass or more, 5 parts by mass or more, 8 parts by mass or more, or 10 parts by mass or more. The content of the rubber component may be 100 parts by mass or less, 80 parts by mass or less, 50 parts by mass or less, 30 parts by mass or less, 20 parts by mass or less, or 10 parts by mass or less. From these viewpoints, the content of the rubber component may be 0.1 to 100 parts by mass, 1 to 50 parts by mass, or 5 to 20 parts by mass.

By using a lubricating agent, the foaming composition can be easily separated from a roll, a molding die, a screw of an extruder, or the like when kneading the foaming composition. Examples of the lubricating agent include fatty acids such as stearic acid; paraffin-based processing aids such as paraffin wax; and fatty acid amides. The content of the lubricating agent may be 0.5 to 5 parts by mass with respect to 100 parts by mass of the chloroprene polymer.

Examples of the aging inhibitor include an amine-based aging inhibitor, an imidazole-based aging inhibitor, a carbamic acid metal salt, a phenol-based aging inhibitor, and an ozone-resistant aging inhibitor (for example, N-phenyl-N'-(1,3-dimethylbutyl)-p-phenylenediamine). Examples of the amine-based aging inhibitor include octylated diphenylamine and 4,4'-bis($\alpha,\alpha$-dimethylbenzyl)diphenylamine. The content of the aging inhibitor may be 1 to 10 parts by mass with respect to 100 parts by mass of the chloroprene polymer.

The Mooney viscosity ($ML_{1+4}$, 100°C) of the foaming composition of the present embodiment may be in the following ranges. From the viewpoint that excellent processability (tacky adhesiveness) is likely to be obtained, the Mooney viscosity may be greater than 0, 1 or greater, 2 or greater, 3 or greater, 4 or greater, 5 or greater, 6 or greater, 7 or greater, 8 or greater, 9 or greater, 10 or greater, or 11 or greater. From the viewpoint that a high expansion ratio is likely to be obtained, the Mooney viscosity may be 20 or less, 15 or less, 12 or less, 11 or less, 10 or less, 9 or less, 8 or less, 7 or less, 6 or less, 5 or less, 4 or less, or 3 or less. From these viewpoints, the Mooney viscosity may be 0 to 20. Along with an increase in the content of the filler, the Mooney viscosity of the foaming composition tends to increase. Along with an increase in the content of the plasticizer or the peptizer, the Mooney viscosity of the foaming composition tends to decrease.

The foaming composition of the present embodiment can be obtained by kneading the above-mentioned components. As a kneading apparatus, a mixer, a Banbury mixer, a kneader mixer, a two-roll, or the like can be used.

A foam body of the present invention may have open cells in which hollow cells are interconnected. An open cell includes a plurality of hollow cells. The term "open cell" means a structure in which at least a part of the cells formed in a foam body are continuous. The foam body may have an open cell structure or may have a semi-open/semi-closed cell structure. The open cell structure refers to a structure having an open cell ratio of 100%. The lower limit of the open cell ratio in a semi-open/semi-closed cell structure exceeds 0% and may be 10% or more. The upper limit of the open cell ratio in the semi-open/semi-closed cell structure is less than 100% and may be less than 98%.

The foam body of the present embodiment may be a single layer. The foam body of the present embodiment can have physical properties suitable for various use applications in a single layer state. The foam body of the present embodiment can be suitably used for buildings, automobiles, railway vehicles, aircraft, electric equipment, audio equipment, audio facilities, and the like, and can constitute the members (an insulating material, an impact absorber, a vibration-proof material, a sound absorber, and the like) used for these use applications.

The hardness (Asker F hardness) of the foam body of the present embodiment may be 1 to 50. Here, the hardness of the foam body can be measured by the following procedure. By using a rubber hardness tester (manufactured by KOBUNSHI KEIKI CO., LTD., trade name: Asker rubber hardness tester F type), a disk-shaped pressing surface is gently placed on the foam body. The value is read by using the self-weight of the hardness tester as the measuring pressure, and the hardness of the foam body is measured.

A production method for a foam body of the present embodiment includes a foaming step of foaming the foaming composition of the present embodiment. In the foaming step, the foaming composition can be heated and foamed. The temperature for heating and foaming may be, for example, 100°C to 220°C.

**Examples**

Hereinafter, the present invention will be described in more detail based on Examples and Comparative Examples; however, the present invention is not intended to be limited to these Examples.

<Production of foam body>

100 parts by mass of a chloroprene polymer (sulfur-modified, manufactured by Denka Company Limited, trade name: DENKA CHLOROPRENE PM-40, a polymer that does not have a structure represented by the above-mentioned General Formula (I)), a filler (carbon black (HAF), manufactured by ASAHI CARBON CO., LTD., trade name: ASAHI #70), a plasticizer (bis(2-ethylhexyl) sebacate (DOS), manufactured by New Japan Chemical Co., Ltd., trade name: SANSO CIZER DOS), a foaming agent (p,p'-oxybisbenzenesulfonyl hydrazide (OBSH), manufactured by Sankyo Kasei Co., Ltd., trade name: CELLMIC S), a peptizer (pentamethylenedithiocarbamic acid piperidine salt (PPD), manufactured by Ouchi Shinko Chemical Industrial Co., Ltd., trade name: NOCCELER PPD), 1 part by mass of stearic acid (lubricating agent, manufactured by Kao Corporation, trade name: LUNAC S-70V), 3 parts by mass of paraffin wax (lubricating agent, manufactured by Nippon Seiro Co., Ltd., trade name: Paraffin Wax-135), 1 part by mass of octylated diphenylamine (aging inhibitor, manufactured by Ouchi Shinko Chemical Industrial Co., Ltd., trade name: NOCRAC AD-F), 4 parts by mass of magnesium oxide (vulcanizing agent, MgO, manufactured by Kyowa Chemical Industry Co., Ltd., trade name: KYOWAMAG 150), and 5 parts by mass of zinc oxide (vulcanizing agent, ZnO, manufactured by SAKAI CHEMICAL INDUSTRY CO., LTD., trade name: ZINC OXIDE II) were kneaded according to JIS K 6299 by using a mixing roll mill (manufactured by Nippon Roll MFG. Co., Ltd., roll temperature: 40°C) that used an 8-inch roll to obtain a foaming composition (compound). The blending amounts of the chloroprene polymer, filler, plasticizer, foaming agent, and peptizer in each Example and each Comparative Example are shown in Table 1 and Table 2.

<Evaluation>

The processability (roll tacky adhesiveness), the Mooney viscosity, and the expansion ratio were evaluated by using the above-described foaming compositions. The results are shown in Table 1 and Table 2.

(Processability)

400 g of the above-described foaming composition was wound around an open roll having a size of 8 inches, and then processability was evaluated at a cooling water temperature of 40°C and a roll gap of 2.0 mm. A case in which the tacky adhesiveness to the roll was weak, and the foaming composition was easily torn off by inserting an incision with a roll knife, was rated as "A"; a case in which the tacky adhesiveness to the roll was slightly strong, and it was necessary to strongly tear off the foaming composition when separating the foaming composition from the roll by inserting an incision with a roll knife, was rated as "B"; and a case in which the tacky adhesiveness to the roll was very strong, and the foaming composition was not torn off from the roll by inserting an incision with a roll knife, was rated as "C".

(Mooney viscosity)

According to JIS K 6300-1 of the Japanese Industrial Standards, the Mooney viscosity ($ML_{1+4}$) of the above-described foaming compositions was measured by using a Mooney viscosity tester (manufactured by SHIMADZU CORPORATION, trade name: SMV-301) with an L-type rotor under the test conditions of a test temperature of 100°C, a preheating time of 1 minute, and a test duration of 4 minutes.

(Expansion ratio)

A sheet having a thickness of 3 mm was produced by means of an open roll by using the above-described foaming composition. A test sample having a length of 20 mm, a width of 20 mm, and a thickness of 3 mm was cut out from this sheet. The test sample was placed on a release sheet, and a foam body was obtained by placing the test sample in a gear oven at 170°C for 20 minutes to foam. The foam body was taken out from the gear oven and maintained at 25°C for 30 minutes, and then the dimensions (length, width, and thickness) of the foam body were measured with vernier calipers. The expansion ratio [unit: %] was calculated by the following formula based on the volume change before and after foaming. An expansion ratio of 700% or higher was considered satisfactory.

$$\text{Expansion ratio} = [(\text{volume after foaming} - \text{volume before foaming})/\text{volume before foaming}] \times 100$$

[Table 1]

| | | Example | | | | Comparative Example | | Example | | | |
|---|---|---|---|---|---|---|---|---|---|---|---|
| | | 1 | 2 | 3 | 4 | 1 | 2 | 5 | 6 | 7 | 8 |
| Blending amount [parts by mass] | Chloroprene polymer | 100 | 100 | 100 | 100 | 100 | 100 | 100 | 100 | 100 | 100 |
| | Filler | 0 | 1 | 5 | 10 | 15 | 1 | 1 | 1 | 1 | 1 |
| | Plasticizer | 10 | 10 | 10 | 10 | 10 | 2 | 5 | 15 | 20 | 2 5 |
| | Foaming agent | 10 | 10 | 10 | 10 | 10 | 10 | 10 | 10 | 10 | 10 |
| | Peptizer | 1 | 1 | 1 | 1 | 1 | 1 | 1 | 1 | 1 | 1 |
| Evaluation | Processability | A | A | A | A | A | A | A | A | B | C |
| | Mooney viscosity | 6 | 6 | 7 | 9 | 12 | 10 | 8 | 4 | 3 | 2 |
| | Expansion ratio [%] | 930 | 920 | 900 | 730 | 640 | 600 | 810 | 1030 | 1090 | 1100 |

[Table 2]

| | | Comparative Example | Example | | | Comparative Example | Example | | | |
|---|---|---|---|---|---|---|---|---|---|---|
| | | 3 | 9 | 10 | 11 | 4 | 12 | 13 | 14 | 15 |
| Blending amount [parts by mass] | Chloroprene polymer | 100 | 100 | 100 | 100 | 100 | 100 | 100 | 100 | 100 |
| | Filler | 1 | 1 | 1 | 1 | 1 | 1 | 1 | 1 | 1 |
| | Plasticizer | 10 | 10 | 10 | 10 | 10 | 10 | 10 | 10 | 10 |
| | Foaming agent | 3 | 5 | 15 | 20 | 10 | 10 | 10 | 10 | 10 |
| | Peptizer | 1 | 1 | 1 | 1 | 0.05 | 0.2 | 0.5 | 2 | 3 |
| Evaluation | Processability | A | A | A | A | A | A | A | B | C |
| | Mooney viscosity | 5 | 6 | 8 | 9 | 15 | 11 | 7 | 4 | 3 |
| | Expansion ratio %] | 590 | 750 | 1000 | 1050 | 460 | 700 | 890 | 1000 | 1010 |

**Claims**

1. A foaming composition comprising a chloroprene polymer, a plasticizer, a foaming agent, and a peptizer, wherein a content of a filler is 10 parts by mass or less, a content of the plasticizer is 3 parts by mass or more, a content of the foaming agent is 5 parts by mass or more, and a content of the peptizer is 0.1 parts by mass or more, with respect to 100 parts by mass of the chloroprene polymer.

2. The foaming composition according to claim 1, wherein the chloroprene polymer includes a sulfur-modified chloroprene polymer.

3. The foaming composition according to claim 1 or 2, wherein the filler includes carbon black.

4. The foaming composition according to any one of claims 1 to 3, wherein the content of the filler is more than 0 parts by mass and 10 parts by mass or less with respect to 100 parts by mass of the chloroprene polymer.

5. The foaming composition according to any one of claims 1 to 4, wherein the plasticizer includes a sebacic acid derivative.

6. The foaming composition according to any one of claims 1 to 5, wherein the content of the plasticizer is 3 to 20 parts by mass with respect to 100 parts by mass of the chloroprene polymer.

7. The foaming composition according to any one of claims 1 to 6, wherein the foaming agent includes an organic foaming agent.

8. The foaming composition according to any one of claims 1 to 7, wherein the peptizer includes a dithiocarbamate-based compound.

9. The foaming composition according to any one of claims 1 to 8, wherein the content of the peptizer is 0.1 to 2 parts by mass with respect to 100 parts by mass of the chloroprene polymer.

10. A foam body of the foaming composition according to any one of claims 1 to 9.

11. A production method for a foam body, the method comprising a step of foaming the foaming composition according to any one of claims 1 to 9.

<div align="center">

**INTERNATIONAL SEARCH REPORT**

</div>

| | International application No. |
|---|---|
| | PCT/JP2021/017732 |

**A.  CLASSIFICATION OF SUBJECT MATTER**
Int. Cl. B29K9/00(2006.01)n, B29K105/04(2006.01)n, C08J9/06(2006.01)i, B29C44/00(2006.01)i, B29C44/36(2006.01)i
FI: C08J9/06 CEQ, B29C44/00, B29C44/36, B29K105:04, B29K9:00
According to International Patent Classification (IPC) or to both national classification and IPC

**B.  FIELDS SEARCHED**

Minimum documentation searched (classification system followed by classification symbols)
Int. Cl. B29K9/00, B29K105/04, C08J9/06, B29C44/00, B29C44/36

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | JP 10-298328 A (TOSOH CORP.) 10 November 1998 (1998-11-10), claims, paragraphs [0006]-[0018], examples | 1-11 |
| A | JP 2013-72052 A (SANWA KAKO CO., LTD.) 22 April 2013 (2013-04-22), entire text | 1-11 |
| A | JP 2005-247952 A (DENKI KAGAKU KOGYO KABUSHIKI KAISHA) 15 September 2005 (2005-09-15), entire text | 1-11 |

☐   Further documents are listed in the continuation of Box C.          ☒   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08.07.2021 | 20.07.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2021/017732

| Patent Documents referred to in the Report | Publication Date | Patent Family | Publication Date |
|---|---|---|---|
| JP 10-298328 A | 10.11.1998 | (Family: none) | |
| JP 2013-72052 A | 22.04.2013 | (Family: none) | |
| JP 2005-247952 A | 15.09.2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018119089 A